# EUROPEAN PATENT APPLICATION

(11) **EP 2 557 658 A2**
(43) Date of publication of application: **13.02.2013**
(21) Application number: 11192067.4
(22) Date of filing: 06.12.2011
(51) Int. Cl.: H02J 9/06, G06F 1/26

(54) **Standby power system for handheld electronic device and method for supplying standby power.**

(30) Priority: 09.08.2011 TW 100128418
(71) Applicant: Askey Technology (Jiangsu) Ltd., Economic-Technological Development Area Wujiang Jiangsu (CN); Askey Computer Corp., New Taipei City 235 (TW)
(72) Inventor: Wang, Ta-Chang, 235 New Taipei City (TW); Hsieh, Ching-Feng, 108 Taipei City (TW)
(74) Representative: Ciceri, Fabio

(57) **Abstract**

A standby power system for handheld electronic device and a method for supplying standby power are introduced. The system and method enable detection whether a handheld electronic device is set to a predetermined power consumption state whereby the handheld electronic device operates in a power supplying state of a standby battery and whether a main battery of the handheld electronic device is disconnected, allowing a user to change the main battery without shutting down the handheld electronic device and thereby saving time.

## Description

### FIELD OF THE INVENTION

The present invention relates to standby power systems for handheld electronic devices and methods for supplying standby power, and more particularly, to a standby power system for changing a main battery of a handheld electronic device without shutting down the handheld electronic device and a method for supplying standby power.

### BACKGROUND OF THE INVENTION

A conventional handheld electronic device, such as a cell phone or a PDA, are usually equipped with one and only one battery in order to get in line with miniaturization and produce downsized products. Hence, once the battery-based power of the conventional handheld electronic device is going to run out, the user will have to store whatever data being processed by the handheld electronic device, shut down the handheld electronic device, change the battery only after the handheld electronic device has been shut down with a view to preventing the data from getting lost, and restart the handheld electronic device after the battery has been changed so as to reenter the pre-change operation state.

However, it takes time to shut down and restart the conventional handheld electronic device. The waste of time annoys the user indeed. The annoyance is further exacerbated by the necessity to interrupt the operation of the handheld electronic device during the time interval between the shutdown and the restart of the handheld electronic device.

### SUMMARY OF THE INVENTION

It is an objective of the present invention to enable users to change a main battery of a handheld electronic device without shutting down the handheld electronic device.

Another objective of the present invention is to restore a handheld electronic device to normal use immediately after changing a main battery of the handheld electronic device.

In order to achieve the above and other objectives, the present invention provides a standby power system adapted for use with a handheld electronic device and configured to supply power to the handheld electronic device when changing a main battery in a predetermined power consumption state of the handheld electronic device. The standby power system comprises: a standby battery; a switch unit connected to the standby battery for enabling or disabling a path along which the standby battery supplies power to the handheld electronic device; and a control unit connected to the switch unit for enabling, after receiving a setting signal for setting the handheld electronic device to the predetermined power consumption state and determining the main battery has stopped supplying power, a power supplying path of the switch unit to thereby allow the handheld electronic device to operate in a power supplying state of the standby battery.

In order to achieve the above and other objectives, the present invention provides a method for supplying standby power to a handheld electronic device. The method comprises the steps of: detecting whether the handheld electronic device is set to a predetermined power consumption state whereby the handheld electronic device operates in a power supplying state of a standby battery; detecting whether a main battery of the handheld electronic device has stopped supplying power; and determining whether all the detecting steps yield an affirmative result, followed by switching to the standby battery for supplying power to a load of the handheld electronic device in response to an affirmative determination.

In an embodiment, the control unit enables the power supplying path of the switch unit only after receiving the setting signal, determining that the main battery has stopped supplying power, and determining that the handheld electronic device is not connected to an external power supply.

In an embodiment, the determining step is preceded by a step of detecting whether the handheld electronic device is connected to an external power supply.

In an embodiment, in the predetermined power consumption state, the handheld electronic device keeps performing a selected specific functional operation but stops performing the other unselected functional operation.

In an embodiment, the predetermined power consumption state is a low power consumption state.

Accordingly, given a good match of the power level of a standby battery and the power consumption in the predetermined power consumption state, a standby battery of a specific battery power level can be selected and provided to suit the features of a handheld electronic device, and in consequence the handheld electronic device restores to a specific function thereof immediately after its battery has been changed and even maintains the specific functional operation while the main battery is being changed. Hence, a standby power system and a method for supplying standby power according to the present invention dispense with a waste of time which might otherwise result from the shutdown and the restart of a handheld electronic device before and after changing a main battery thereof.

### BRIEF DESCRIPTION OF THE DRAWINGS

Objectives, features, and advantages of the present invention are hereunder illustrated with specific embodiments in conjunction with the accompanying drawings, in which:
FIG 1 is a functional block diagram of a standby power system in an embodiment of the present invention;
FIG 2 is a flowchart of a method for supplying standby power in an embodiment of the present invention; and
FIG 3 is a flowchart of a method for supplying standby power in another embodiment of the present invention.

### DETAILED DESCRIPTION OF THE PREFERRED EMBODIMENTS

Various components described in embodiments of the present invention serve an illustrative purpose only. Persons skilled in the art should understand that various components whereby the functions or the method described in the embodiments of the present invention can be effected are applicable to the present invention.

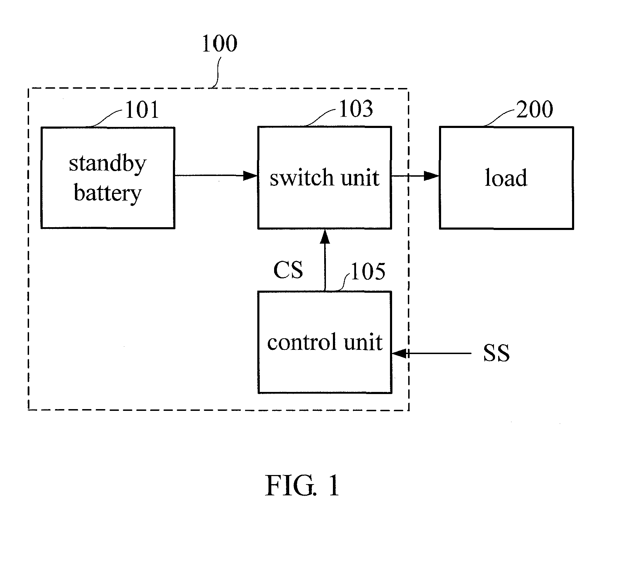

Referring to FIG 1, there is shown a functional block diagram of a standby power system 100 in an embodiment of the present invention. The standby battery system 100 comprises a standby battery 101, a switch unit 103, and a control unit 105.

The standby battery 101 supplies power to a handheld electronic device whenever a main battery stops supplying power to the handheld electronic device, for example while the main battery is disconnected. Power consumed by the handheld electronic device is hereinafter collectively referred to as a load 200.

The switch unit 103 is connected between the standby battery 101 and the load 200 for enabling or disabling a path along which the standby battery 101 supplies power to the load 200. The switch unit 103 is, for example, a transistor, which is put under the control of a control signal CS and thus is controllably electrically ON or OFF, so as to enable or disable the path between the standby battery 101 and the load 200. For example, the switch unit 103 comes in the form of PMOS or NMOS

The control unit 105 is connected to the switch unit 103. For example, the control unit 105 can be a control component, such as MCU or CPU. Once the control unit 105 receives a setting signal SS and the main battery stops supplying power (disconnecting the main battery, for example), the control signal CS sent from the control unit 105 will cause the switch unit 103 to enable a power supplying path, such that the power from the standby battery 101 can be supplied to the load 200. Hence, if the two aforesaid conditions are not satisfied simultaneously, the control unit 105 will not trigger the starting operation of the switch unit 103. For example, the handheld electronic device can be selectively set to the predetermined power consumption state in accordance with the user's operation. For example, to change the main battery, the user presses a specific key to generate a setting signal SS; then, the setting signal SS causes the system of the handheld electronic device to enter a low power consumption state, and the setting signal SS is sent to the control unit 105. In this regard, the user may set the predetermined power consumption state according to the maximum power level of the standby battery, such that a portion of the functions and operation of the handheld electronic device is specified as the one to be continuously maintained.

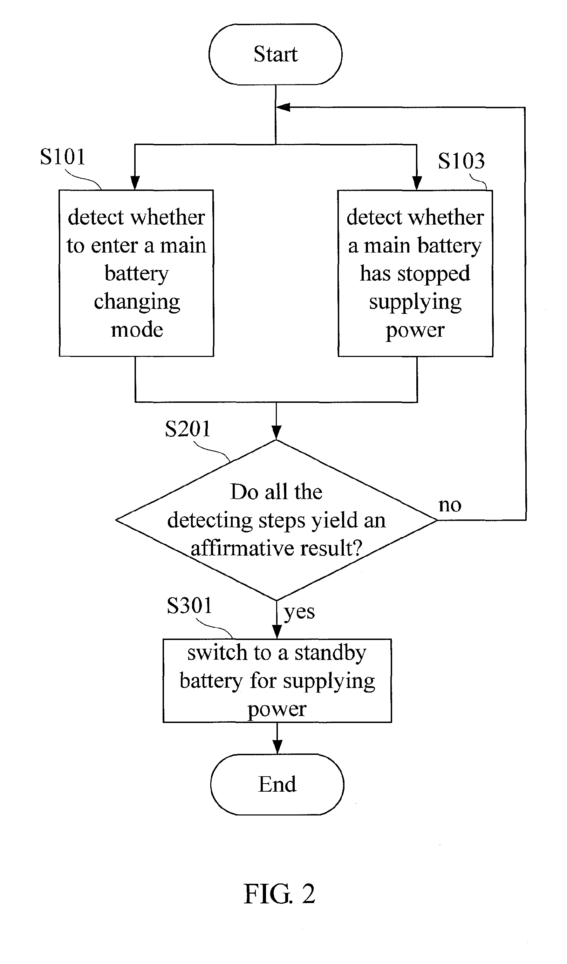

Referring to FIG 2, there is shown a flowchart of a method for supplying standby power in an embodiment of the present invention.

Step S101 involves detecting whether the handheld electronic device is set to a predetermined power consumption state. Step S103 involves detecting whether a main battery of the handheld electronic device has stopped supplying power. Step S201 is a determining step which involves determining whether all the detecting steps yield an affirmative result, followed by going to step 301 for controlling the control unit 105 and thereby switching to the standby battery 101 for supplying power to the load 200 of the handheld electronic device in response to an affirmative determination.

The predetermined power consumption state is premised on a special operation state in which the user is going to change a main battery, such as a low power consumption state. In the predetermined power consumption state, functions which are allowable in the aforesaid special operation state are defined according to the maximum power level of the standby battery 101. In addition, it is feasible to determine the maximum power level of the standby battery 101 of the handheld electronic device as needed.

For example, assuming that the handheld electronic device is a cell phone, the maximum power level of the standby battery can be designed in a manner that it allows the user to perform only normal phone conversation for at least a predetermined period of time. In doing so, even if a main battery runs out of power in the course of the user's phone conversation, the user can operate the cell phone in a specific manner, such as pressing a hot key, to instruct the cell phone to enter a main battery changing mode; meanwhile, the predetermined power consumption state keeps the phone conversation function working without interruption. The standby battery starts to supply power as soon as the user disconnects the main battery. Upon completion of the main battery changing process, the necessity for interruption of power supply from the main battery no longer exists, and thus the cell phone starts to receive power from the main battery again. The aforesaid "performing only normal phone conversation for at least a predetermined period of time" means pausing other functions (such as surfing the Internet) of the cell phone, such that the power supplied by the standby battery is set apart for the specific use in the phone conversation function.

Similarly, given a limited power capacity of the standby battery, the predetermined power consumption state can be set in a manner that it allows the handheld electronic device to perform only the Internet connection function for at least a predetermined period of time. Alternatively, the handheld electronic device provides multiple predetermined power consumption state options for the user to choose from, such that the user can enter a specific predetermined power consumption state corresponding to a required function.

Furthermore, the standby battery can further retrieve power from the main battery by means of a charging circuit to thereby perform a charging operation on itself

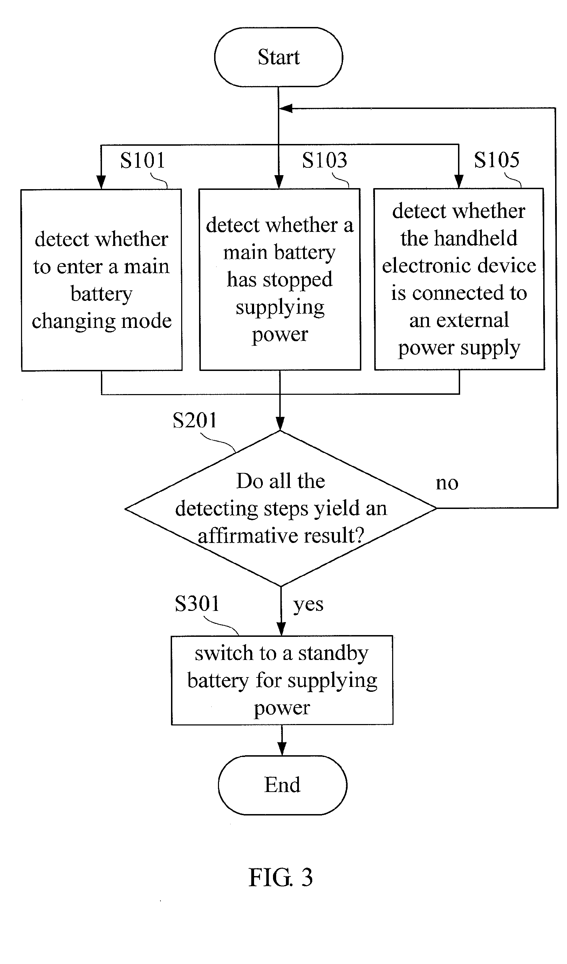

Referring to FIG 3, there is shown a flowchart of a method for supplying standby power in another embodiment of the present invention. In addition to the two detecting steps depicted in FIG 2, the method of FIG 3 gives further considerations to a possible behavior model of the user and thus further comprises the third detecting step, that is, S105: detecting whether the handheld electronic device is connected to an external power supply (such as an AC/DC transformer). It is only when all the aforesaid three detecting steps yield an affirmative result that the process flow of the method goes to the step of switching to the standby battery for supplying power to the load of the handheld electronic device.

Thanks to the convenience of changing the main battery without the hassle of shutting down the handheld electronic device, the user can also enter the predetermined power consumption state to change the main battery therein while the handheld electronic device is being connected to an external power supply, thereby opening the possibility of the third detecting step. Furthermore, it is also feasible that the third detecting step is included in the process flow of the method of FIG 3 solely for the purpose of extending the service life of the standby battery or any other advantageous purpose.

In conclusion, a standby power system for a handheld electronic device and a method for supplying standby power in the embodiments of the present invention set a predetermined power consumption state according to the operation requirements of the handheld electronic device to restore the handheld electronic device to a specific function thereof immediately after changing a main battery thereof and even maintain the operation of the specific function while changing the main battery, thereby dispensing with the hassle of shutting down the handheld electronic device and avoiding a waste of time.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A standby power system adapted for use with a handheld electronic device and configured to supply power to the handheld electronic device when changing a main battery in a predetermined power consumption state of the handheld electronic device, the standby power system comprising:
a standby battery;
a switch unit connected to the standby battery for enabling or disabling a path along which the standby battery supplies power to the handheld electronic device; and
a control unit connected to the switch unit for enabling, after receiving a setting signal for setting the handheld electronic device to the predetermined power consumption state and determining the main battery has stopped supplying power, a power supplying path of the switch unit to thereby allow the handheld electronic device to operate in a power supplying state of the standby battery.

2. The standby power system of claim 1, wherein the control unit enables the power supplying path of the switch unit only after receiving the setting signal, determining that the main battery has stopped supplying power, and determining that the handheld electronic device is not connected to an external power supply.

3. The standby power system of claim 2, wherein the predetermined power consumption state is a low power consumption state.

4. A method for supplying standby power to a handheld electronic device, the method comprising the steps of:
detecting whether the handheld electronic device is set to a predetermined power consumption state whereby the handheld electronic device operates in a power supplying state of a standby battery;
detecting whether a main battery of the handheld electronic device has stopped supplying power; and
determining whether all the detecting steps yield an affirmative result, followed by switching to the standby battery for supplying power to the handheld electronic device in response to an affirmative determination.

5. The method of claim 4, wherein the determining step is preceded by a step of detecting whether the handheld electronic device is connected to an external power supply.

6. The method of claim 4, wherein, in the predetermined power consumption state, the handheld electronic device operates to provide a portion of specific functions thereof.

7. The method of claim 5, wherein, in the predetermined power consumption state, the handheld electronic device operates to provide a portion of specific functions thereof.
